# EUROPEAN PATENT SPECIFICATION

(11) **EP 4 322 002 B1**
(45) Date of publication and mention of the grant of the patent: **23.09.2026**
(21) Application number: 22783970.1
(22) Date of filing: 01.04.2022
(51) Int. Cl.: G06F 9/50, H04L 67/289, H04L 67/52, H04W 4/02

(54) **METHOD AND APPARATUS FOR PROCESSING INFORMATION OF EDGE CONFIGURATION SERVER, AND COMMUNICATION DEVICE**
VERFAHREN UND VORRICHTUNG ZUR VERARBEITUNG VON INFORMATIONEN EINES KANTENKONFIGURATIONSSERVERS UND KOMMUNIKATIONSVORRICHTUNG
PROCÉDÉ ET APPAREIL DE TRAITEMENT D'INFORMATIONS DE SERVEUR DE CONFIGURATION DE BORD, ET DISPOSITIF DE COMMUNICATION

(30) Priority: 06.04.2021 CN 202110369395
(43) Date of publication of application: 14.02.2024
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHENG, Shaowen, Beijing 100053 (CN); WANG, Dan, Beijing 100053 (CN); DU, Zongpeng, Beijing 100053 (CN); FU, Yuexia, Beijing 100053 (CN)
(74) Representative: GPI Brevets
(86) International application number: PCT/CN2022/084880
(87) International publication number: WO 2022/213903

(56) References cited:
- WO-A1-2021/052080
- WO-A1-2021/052080
- CN-A- 110 198 516
- CN-A- 113 630 749
- KR-A- 20200 115 155
- US-A1- 2019 260 827
- SPRECHER NOKIA NURIT ET AL: "Harmonizing standards for edge computing -A synergized architecture leveraging ETSI ISG MEC and 3GPP specifications", 1 July 2020 (2020-07-01), XP093252798, Retrieved from the Internet <URL:https://www.etsi.org/images/files/ETSIWhitePapers/ETSI_wp36_Harmonizing-standards-for-edge-computing.pdf> [retrieved on 20250220]

## Description

### TECHNICAL FIELD

The present disclosure relates to the field of communication technology, in particular to Edge Configuration Server (ECS) information processing methods, an SMF, a UDM, computer-readable program storage media, and computer program products.

### BACKGROUND

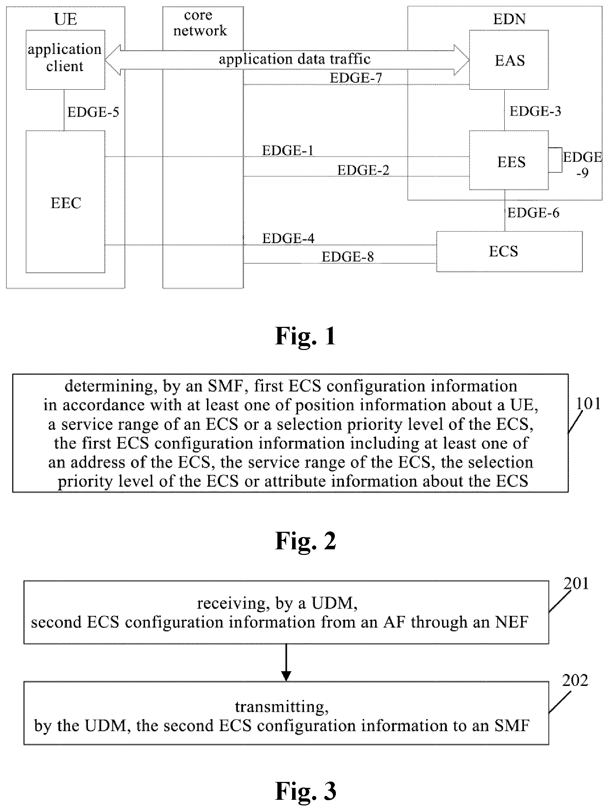

Edge Data Network (EDN) is a local data network, and as shown in Fig. 1, an Edge Application Server (EAS) and an Edge Enabler Server (EES) are included in the EDN. An ECS provides a configuration related to the EES, which includes detailed information about the EDN for the hosted EES. A User Equipment (UE) includes an application client and an Edge Enabler Client (EEC). The EAS, EES and ECS interact with a 3^{rd}-Generation Partnership Project (3GPP) core network.

For the UE, a to-be-requested application service may be provided by a plurality of EASs deployed in different EDNs, and these EAS instances carrying a same content or service use an individual Internet Protocol (IP) address (anycast address) or different IP addresses. The EES takes charge of providing information about the EASs to the EECs, so as to support the EECs to exchange data with the EASs. Information about the EES is provided by the ECSs which are deployed by an operator or a third party, and configuration information about the plurality of ECSs is obtained by a user in various ways. Currently, there is no scheme about how to help, by a network, the user to determine an appropriate ECS.

Patent literature WO 2021/052080 A1 discloses a method of managing task offloading to edge servers in an MEC system, which allows bypassing the initial acceptance phase, reducing overall latency while remaining compliant with the ETSI MEC architecture.

Non-patent literature named "Harmonizing standards for edge computing - A synergized architecture leveraging ETSI ISG MEC and 3GPP specifications" discusses many aspects of edge computing for edge cloud infrastructures.

### SUMMARY

The scope of the present invention is determined only by the scope of the appended claims. More precisely, in one aspect, the present disclosure provides an ECS information processing method according to claim 1 and further detailed in the dependent claims referring back to this claim.

Furthermore, in yet another aspect, the present disclosure provides another ECS information processing method according to claim 5.

Furthermore, in yet another aspect, the present disclosure provides an SMF according to claim 6.

Furthermore, in yet another aspect, the present disclosure provides a UDM according to claim 7.

Furthermore, in yet another aspect, the present disclosure provides computer-readable program storage media according to claim 8 or claim 9.

Furthermore, in yet another aspect, the present disclosure provides computer program products according to claim 10 or claim 11.

### BRIEF DESCRIPTION OF THE DRAWINGS

Fig. 1 is a schematic view showing the interaction between an EDN and a UE;
Fig. 2 is a flow chart of an ECS information processing method according to one embodiment of the present disclosure;
Fig. 3 is another flow chart of the ECS information processing method according to one embodiment of the present disclosure;
Fig. 4 is a schematic view showing an interaction procedure of the ECS information processing method according to one embodiment of the present disclosure;
Fig. 5 is another schematic view showing the interaction procedure of the ECS information processing method according to one embodiment of the present disclosure;
Fig. 6 is yet another schematic view showing the interaction procedure of the ECS information processing method according to one embodiment of the present disclosure;
Fig. 7 is a schematic view showing an ECS information processing device according to one embodiment of the present disclosure;
Fig. 8 is another schematic view showing the ECS information processing device according to one embodiment of the present disclosure; and
Fig. 9 is a schematic view showing a hardware structure of a communication device according to one embodiment of the present disclosure.

### DETAILED DESCRIPTION

The present disclosure will be described hereinafter in conjunction with the drawings and embodiments.

The present disclosure provides in some embodiments an ECS information processing method for an SMF which, as shown in Fig. 2, includes Step 101 of determining, by the SMF, first ECS configuration information in accordance with at least one of position information about a UE, a service range of an ECS or a selection priority level of the ECS. The first ECS configuration information includes at least one of an address of an ECS, the service range of each ECS, the selection priority level of the ECS or attribute information about the ECS.

In the embodiments of the present disclosure, ECS configuration information (including the first ECS configuration information, second ECS configuration information and locally-configured ECS configuration information) includes configuration information about the ECS. The ECS is deployed by a service provider or a third party.

In the embodiments of the present disclosure, the SMF includes the locally-configured ECS configuration information through manual configuration. In addition, the SMF also obtains the ECS configuration information from a UDM, i.e., the second ECS configuration information, which is obtained from an AF. The SMF determines the first ECS configuration information in accordance with at least one of the position information about the UE, the service range of each ECS or a selection priority level of the ECS, and the first ECS configuration information includes at least one of the address of each ECS, the service range of each ECS, the selection priority level of the ECS or the attribute information about the ECS. As a result, the SMF provides the first ECS configuration information to the UE subsequently, so it is able for the UE to select an appropriate ECS server in accordance with the first ECS configuration information before the use of an relevant application service, thereby to establish a communication connection with an EAS and an EES in accordance with relevant configuration information about the EAS and the EES provided by the ECS.

In a possible embodiment of the present disclosure, when the SMF includes the locally-configured ECS configuration information, the locally-configured ECS configuration information has a highest priority level.

In the embodiments of the present disclosure, when the SMF includes the locally-configured ECS configuration information, the locally-configured ECS configuration information has a highest priority level. When the SMF does not include locally-configured ECS configuration information, the SMF determines an ECS selection priority level (i.e., a second selection priority level) in accordance with the position information about the UE, the service range of each ECS and a selection priority level (i.e., a first selection priority level) of the ECS, and the second selection priority level is the same as or different from the first selection priority level. In a possible embodiment of the present disclosure, the SMF determines the selection priority level of the ECS (i.e., the second selection priority level) in accordance with the position information about the UE and the service range of each ECS. For example, when the position information about the UE indicates that the UE is located within a service range of an ECS, the selection priority level of the corresponding ECS has a high priority level, and when the position information about the UE indicates that the UE is not located within a service range of an ECS, the selection priority level of the corresponding ECS has a low priority level. In another possible embodiment of the present disclosure, when the SFM determines the first ECS configuration information in accordance with the selection priority level of the ECS (i.e.,. the first selection priority level) and the first ECS configuration information includes the selection priority level of the ECS (i.e., the second selection priority level), the SMF takes the first selection priority level as the second selection priority level, or re-determines the second selection priority level in conjunction with the other information, e.g., the position information about the UE and/or the service range of each ECS.

In a possible embodiment of the present disclosure, the ECS information processing method further includes receiving, by the SMF, subscription information about the UE from the UDM, and the subscription information about the UE at least includes the second ECS configuration information.

For example, the AF transmits the second ECS configuration information to an NEF, the NEF transmits the second ECS configuration information to the UDM, and the UDM transmits the second ECS configuration information to the SMF.

In the embodiments of the present disclosure, the second ECS configuration information includes at least one of an address of an ECS, a service range of the ECS, a selection priority level of the ECS or attribute information about the ECS. The attribute information about the ECS in each of the first ECS configuration information and the second ECS configuration information includes at least one of the information about a party to which the ECS belongs or the application service list. In a possible embodiment of the present disclosure, contents included in the locally-configured ECS configuration information are also the same as or different from contents in the second ECS configuration information.

In a possible embodiment of the present disclosure, prior to determining, by the SMF, the first ECS configuration information in accordance with at least one of the position information about the UE, the service range of each ECS or the selection priority level of the ECS, the SMF receives the subscription information about the UE from the UDM, and the subscription information about the UE at least includes the second ECS configuration information. For example, when the second ECS configuration information includes at least one of an address of an ECS, a service range of the ECS, a selection priority level of the ECS or attribute information about the ECS, the SMF determines the first ECS configuration information in accordance with the service range of each ECS and the selection priority level of each ECS in the second ECS configuration information obtained from the UDM in advance in conjunction with the position information about the UE.

In the embodiments of the present disclosure, when the second ECS configuration information includes the selection priority level of the ECS (i.e., the first selection priority level) and the first ECS configuration information includes the selection priority level of each ECS (i.e., the second selection priority level), the first selection priority level is the same as or different from the second selection priority level. In other words, the SMF determines the first ECS configuration information in accordance with at least one of the position information about the UE, and the service range of each ECS and the selection priority level of the ECS in the second ECS configuration information. In a possible embodiment of the present disclosure, when the SMF includes the locally-configured ECS configuration information, the locally-configured ECS configuration has a high priority level, i.e., the SMF re-determines the selection priority level of the ECS.

For example, Table 1 shows contents included in the second ECS configuration information (or the first ECS configuration information), including: ECS information, e.g., a Uniform Resource Locator (URL) and/or an IP address and/or a Fully Qualified Domain Name (FQDN); an ECS service range, e.g., a list of longitudes and latitudes of a service; and an application list provided by each ECS. In a possible embodiment of the present disclosure, the second ECS configuration information (or the first ECS configuration information) further includes information about the UE corresponding to each UCS, e.g., a UE Identity (ID), such as Subscription Permanent Identifier (SUPI), Generic Public Subscription Identifier (GPSI), etc.

**Table 1**

| Parameters | Description |
|---|---|
| ECS information | URL/IP address |
| ECS service range | List of longitudes and latitudes |
| Applications provided by ECS | Application list |
| ECS priority level | Priority level |
| Address of UE ID of interest (SUPI, GPSI) | Optional |

In a possible embodiment of the present disclosure, the ECS information processing method further includes receiving, by the SMF, a session establishment request message from the UE through an AMF, and the session establishment request message includes indication information for requesting ECS configuration information.

In the embodiments of the present disclosure, the SMF obtains the session establishment request message from the UE through the AMF. On one hand, the session establishment request message is used to establish a session, e.g., a Protocol Date Unit (PDU) session establishment request message. On the other hand, the session establishment request message includes the indication information for requesting the ECS configuration information. For example, the indication information for requesting the ECS configuration information is carried in a Protocol Configuration Option (PCO), e.g., an empty field, in the session establishment request message.

In a possible embodiment of the present disclosure, the session establishment request message further includes at least one of an SUPI, session management subscription data, a Data Network Name (DNN), or network slice selection auxiliary information.

In a possible embodiment of the present disclosure, the ECS information processing method further includes transmitting the first ECS configuration information to the UE through the AMF. For example, the first ECS configuration information is carried in the PCO in the message.

According to the embodiments of the present disclosure, the SMF determines the first ECS configuration information in accordance with at least one of the position information about the UE, the service range of each ECS or the selection priority level of the ECS, and the first ECS configuration information includes at least one of the address of each ECS, the service range of each ECS, the selection priority level of the ECS or the attribute information about the ECS. As a result, the SMF provides the first ECS configuration information to the UE subsequently, so it is able for the UE to select an appropriate ECS server in accordance with the first ECS configuration information (e.g., the selection priority level of the ECS in the first ECS configuration information) before the use of an relevant application service, thereby to establish a communication connection with an EAS and an EES in accordance with relevant configuration information about the EAS and the EES provided by the ECS.

The present disclosure further provides in some embodiments an ECS information processing method for a UDM which, as shown in Fig. 3, includes: Step 201 of receiving, by the UDM, second ECS configuration information from an AF through an NEF; and Step 202 of transmitting, by the UDM, the second ECS configuration information to an SMF.

In the embodiments of the present disclosure, the second ECS configuration information includes at least one of an address of an ECS, a service range of the ECS, a selection priority level of the ECS or attribute information about the ECS, and the attribute information about the ECS includes at least one of information about a party to which the ECS belongs or an application service list.

In a possible embodiment of the present disclosure, the transmitting, by the UDM, the second ECS configuration information to the SMF includes transmitting, by the UDM, subscription information about the UE to the SMF, and the subscription information about the UE at least includes the second ECS configuration information.

The description about the first ECS configuration information in the embodiments of the present disclosure may refer to that mentioned hereinabove and in Table 1, which will not be particularly defined herein.

The ECS information processing method will be described hereinafter in conjunction with specific embodiments.

### First Embodiment

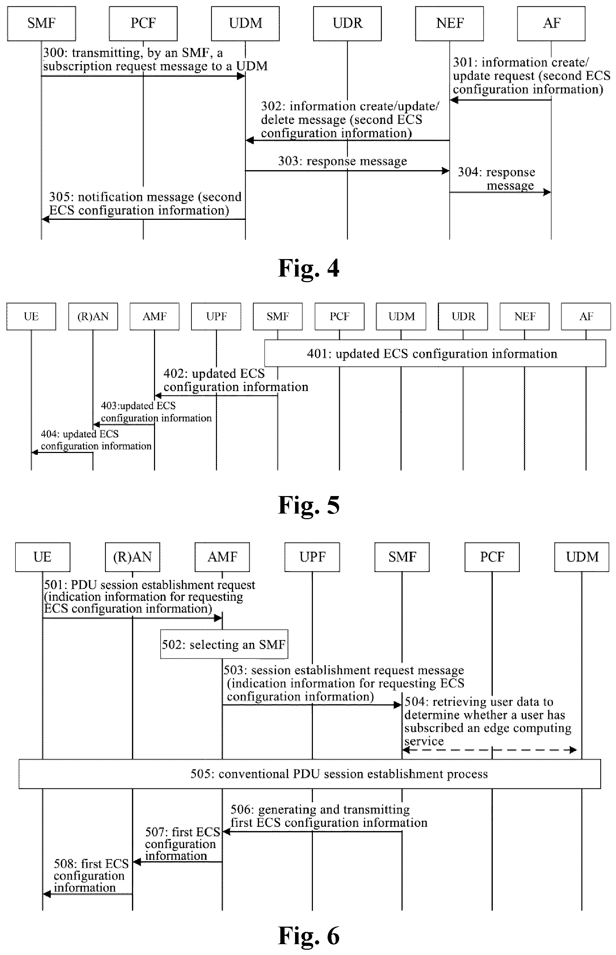

In this embodiment, a scheme for updating the ECS configuration information in the SMF through capability exposure. To be specific, the SMF obtains the second ECS configuration information from the AF. Fig. 4 shows an interaction procedure of the ECS information processing method. As shown in Fig. 4, the ECS information processing method includes the following steps.

Step 300: the SMF transmits a subscription request message (Nudm_SDM_subscribe request) to the UDM, and the subscription request message is used to request the ECS configuration information (i.e., the second ECS configuration information).

Step 301: the AF transmits an information create/update request including the ECS configuration information (i.e., the second ECS configuration information) to the NEF.

For example, the AF transmits a message Nnef_ParameterProvision_Create/ Nnef_ParameterProvision _Update to the NEF, and the message carries the ECS configuration information (i.e., the second ECS configuration information).

The message includes a GPSI, expected UE behavior parameters, network configuration parameters, ECS configuration information (ECS info data), external group identifier and 5^{th}-Generation (5G) Virtual Network (VN) group data, 5GVN group membership management parameters, etc.

Step 302: when the AF is authorized by the NEF to perform operations provided by the parameters, the NEF transmits an information create/update/delete request including the ECS configuration information (i.e., the second ECS configuration information) to the UDM.

For example, the NEF transmits message Nudm_ParameterProvision_Update/ Nudm_ParameterProvision_Create/Nudm_ParameterProvision_Delete carrying the ECS configuration information (i.e., the second ECS configuration information) to the UDM.

The update request message, the create request message and the delete request message each includes a GPSI, an AF ID, a transaction reference ID, ECS information (ECS information data), an NEF reference ID, etc., so as to create, update or delete the subscription user data pre-configuration parameters (including the ECS information) provided by the UDM.

Step 303: the UDM transmits a response message to the NEF.

For example, the UDM transmits a message Nudm_ParameterProvision_Create Response/ Nudm_ParameterProvision_Update Response/ Nudm_ParameterProvision_Delete Response to the NEF. In the case that Step 302 fails, the response message further includes a cause value indicating a cause of a failure.

Step 304: the NEF transmits a response message to the AF.

For example, the NEF transmits a message Nnef_ParameterProvision_Create Response/ Nnef_ParameterProvision _Update Response to the AF. When this procedure fails, the response message further includes a cause value indicating a cause of a failure.

Step 305: the UDM transmits a notification message including the subscription information about the UE to the SMF, and the subscription information about the UE includes the ECS configuration information (i.e., the second ECS configuration information).

For example, the UDM transmits a message Nudm_SubscriberDataManagement (SDM) _Notification to the SMF, so as to notify the SMF of the updated subscription user data (the subscription information about the UE). The message further includes an SUPI, a parameter set related to the SMF, a DNN, Single Network Slice Selection Assistance Information (S-NSSAI), etc. The SMF stores the received parameters, and associates the parameters with a PDU session in accordance with the DNN and the S-NSSAI in the message from the UDM.

In a possible embodiment of the present disclosure, the SMF returns an Acknowledgement (ACK) to the UDM.

### Second Embodiment

Based on the first embodiment, in this embodiment of the present disclosure, the SMF updates the ECS information to the UE. Fig. 5 shows an interaction procedure of the ECS information processing method. As shown in Fig. 5, the ECS information processing method includes the following steps.

Step 401: like that in the first embodiment, the AF configures the updated ECS configuration information for the UDM through capability exposure, and synchronizes it to the SMF.

Step 402: the SMF makes a policy decision. The SMF determines whether the updated ECS configuration information needs to be transmitted to the AMF. Here, the SMF transmits the updated ECS configuration information to the AMF.

For example, the SMF transmits the updated ECS configuration information to the AMF through a message Namf_Communication_N1N2MessageTransfer in a PDU session modification process.

Step 403: the AMF transmits the updated ECS configuration information to a (Radio) Access Network ((R)AN) device.

For example, the AMF transmits the updated ECS configuration information to the (R)AN device through an N2 PDU session request message.

Step 404: the (R)AN device transmits the updated ECS configuration information to the UE (transparent transmission).

For example, the (R)AN device transmits the updated ECS configuration information to the UE through a Non-Access Stratum (NAS) message, e.g., AN specific signaling exchange. The message further includes a PDU session ID, an N1 SM container (including PDU session establishment accept), etc.

Steps 402 to 404 relate to a procedure of transmitting the updated ECS configuration information to the UE through a PDU session modification process, and a signaling storm may occur. In order to prevent the occurrence of the signaling storm, a request from the UE is forwarded to a new ECS through Hyper Text Transfer Protocol (HTTP) redirection.

In a possible embodiment of the present disclosure, the forwarding the request from the UE to the new ECS through redirection includes: receiving, by a first ECS, a first request message from the UE, and transmitting the second ECS configuration information to the UE. The second ECS configuration information is used by the UE to redirect the first request message to a second ECS.

### Third Embodiment

In this embodiment, a complete scheme of obtaining, by the UE, the ECS information through NAS signaling is provided. Fig. 6 shows an interaction procedure of the ECS information processing method. As shown in Fig. 6, the ECS information processing method includes the following steps.

Step 501: the UE transmits a PDU session establishment request message to the AMF through the (R)AN device, and the message includes indication information for requesting the ECS configuration information.

For example, the UE initiates a PDU session establishment request through an NAS message, and the NAS message includes S-NSSAI(s), DNN, PDU session ID, request type, old PDU session ID, PCO, N1 SM container (PDU session establishment request), etc. The DNN is used for the SMF to select a corresponding ECS.

In this embodiment of the present disclosure, a container identifier (0040H, which represents an empty field for the ECS information request) is added in an additional parameters list of the PCO, so as to indicate the indication information for requesting the ECS configuration information.

Step 502: the AMF selects the SMF.

Step 503: the AMF transmits a session establishment request message to the SMF, and the request message includes indication information for requesting the ECS configuration information. Here, the implementation of the indication information is the same as that of the indication information carried through the PCO in Step 501, and thus will not be particularly defined herein.

For example, the session establishment request message is Nsmf_PDUSession_CreateSMContext Request, and it further includes SUPI, DNN, S-NSSAI(s), PDU session ID, N1 SM container (including a PDU session establishment request), user location information (also called as UE location information), access type, PEI, GPSI, etc.

Step 504: the SMF retrieves user data from the UDM, so as to determine whether a user has subscribed an edge computing service and obtain the ECS configuration information.

For example, the SMF retrieves the user data through a message Nudm_SDM_Get, so as to determine whether the user has subscribed the edge computing service and obtain the ECS configuration information. The message includes SUPI, session management subscription data, DNN, S-NSSAI (the S-NSSAI is an S-NSSAI of a home S-NSSAI).

In this step, when the session management subscription data about the home SUPI, home DNN and home S-NSSAI is unavailable, the SMF retrieves the user data in the UDM through Nudm_SDM_Get (carrying the home SUPI, the session management subscription data, the DNN and the S-NSSAI), and subscribes the service using the session management subscription data. The UDM obtains relevant information (including SUPI, user subscription data, session management subscription data, home DNN, S-NSSAI, etc.) from a UDR through Nudr_DM_Query, and subscribes a notification about the same data from the UDR through Nudr_DM_subscribe.

This step is optional.

Step 505: the SMF executes a conventional PDU session establishment process. It should be appreciated that, a network device involved in the execution of the conventional PDU session establishment process is not limited to that shown in Fig. 6.

Step 506: the SMF determines the first ECS configuration information) in accordance with at least one of the position information about the UE, the service range of the ECS or the selection priority level of the ECS, and transmits the first ECS configuration information to the AMF.

In this step, the SMF obtains the second ECS configuration information through the method in the first embodiment or the second embodiment, and the second ECS configuration information includes at least one of the address of the ECS, the service range of the ECS, the selection priority level of the ECS, or the attribute information about the ECS. The SMF determines the first ECS configuration information in accordance with at least one of the position information about the UE, the service range of the ECS in the second ECS configuration information, or the selection priority level of the ECS (the selection priority level of the ECS in the second ECS configuration information or a locally-configured selection priority of the ECS). The first ECS configuration information includes at least one of the address of the ECS, the service range of the ECS, the selection priority level of the ECS, or the attribute information about the ECS.

For example, when the first ECS configuration information includes the selection priority level of the ECS, the selection priority level of the ECS is also called as an ECS rule, ECS rule information, ECS priority level ranking, etc. For example, the selection priority level of the ECS is a priority level of the ECS, or an order of priority levels of the ECSs.

For example, the SMF transmits the first ECS configuration information through a message Namf_Communication_N1N2MessageTransfer, and the message includes PDU session ID, N2 session management information (N2 SM information, including PDU session ID, QFI(s), etc.), N1 SM container (including PDU session establishment accept, which includes Quality of Service (QoS) rule(s) and QoS flow level QoS parameters)), selected Session and Service Continuity (SSC) mode, S-NSSAI(s), DNN, allocated IPv4 address, interface identifier, session-Aggregated Maximum Bit Rate (AMBR), selected PDU session type, ECS information, etc. in a possible embodiment of the present disclosure, a container identifier (0041H (ECS info response)) is added in an additional parameters list of the PCO in the message, so as to indicate the first ECS configuration information.

Step 507: the AMF transmits the first ECS configuration information to the (R)AN device.

For example, the AMF transmits the first ECS configuration information to the (R)AN device through an N2 PDU session request message, and the request message includes N2 SM information, NAS message, etc. The NAS message includes PDU session ID, N1 SM container (including PDU session establishment accept), etc.

Step 508: the (R)AN device transmits the first ECS configuration information to the UE.

For example, the (R)AN device transmits the first ECS configuration information to the UE through the NAS message, e.g., AN specific signaling exchange, and the NAS message further includes PDU session ID, N1 SM container (including PDU session establishment accept), etc.

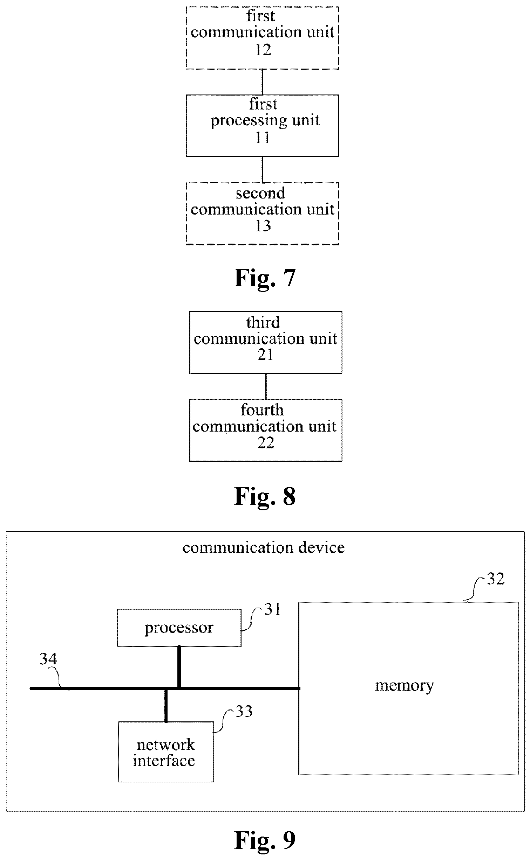

Based on the above, the present disclosure further provides in some embodiments an ECS information processing device which, as shown in Fig. 7, includes a first processing unit 11 configured to determine first ECS configuration information in accordance with at least one of position information about a UE, a service range of an ECS or a selection priority level of the ECS. The first ECS configuration information includes at least one of an address of the ECS, the service range of the ECS, the selection priority level of the ECS or attribute information about the ECS.

In a possible embodiment of the present disclosure, the ECS information processing device further includes a first communication unit 12 configured to receive subscription information about the UE from a UDM, and the subscription information about the UE at least includes second ECS configuration information.

In a possible embodiment of the present disclosure, when the SMF includes locally-configured ECS configuration information, the locally-configured ECS configuration information has a high priority level.

In a possible embodiment of the present disclosure, the second ECS configuration information includes at least one of an address of an ECS, a service range of the ECS, a selection priority level of the ECS or attribute information about the ECS, and the attribute information about the ECS includes at least one of information about a party to which the ECS belongs or an application service list.

In a possible embodiment of the present disclosure, the attribute information about the ECS includes at least one of information about a party to which the ECS belongs or an application service list.

In a possible embodiment of the present disclosure, the ECS information processing device further includes a second communication unit 13 configured to receive a session establishment request message from the UE through an AMF, and the session establishment request message includes indication information for requesting ECS configuration information.

In a possible embodiment of the present disclosure, the second communication unit 13 is further configured to transmit the first ECS configuration information to the UE through the AMF.

In the embodiments of the present disclosure, the ECS information processing device is used in an SMF. In actual use, the first processing unit 11 is implemented through a Central Processing Unit (CPU), a Digital Signal Processor (DSP), a Microcontroller Unit (MCU) or a Field-Programmable Gate Array (FPGA), and the first communication unit 12 and the second communication unit 13 are implemented through a communication module (including a basic communication suite, an operating system, a communication component, a standardized interface, a protocol, etc.) and a transceiver antenna.

The present disclosure further provides in some embodiments an ECS information processing device which, as shown in Fig. 8, includes: a third communication unit 21 configured to receive second ECS configuration information from an AF through an NEF; and a fourth communication unit 22 configured to transmit the second ECS configuration information to the SMF.

In a possible embodiment of the present disclosure, the second ECS configuration information includes at least one of an address of an ECS, a service range of the ECS, a selection priority level of the ECS or attribute information about the ECS, and the attribute information about the ECS includes at least one of information about a party to which the ECS belongs or an application service list.

In the embodiments of the present disclosure, the ES information processing device is used in a UDM. In actual use, the third communication unit 21 and the fourth communication unit 22 are implemented through a communication module (including a basic communication suite, an operating system, a communication component, a standardized interface, a protocol, etc.) and a transceiver antenna.

It should be appreciated that, the ECS information processing devices have been illustratively described hereinabove merely on the basis of the above-mentioned division of program modules when processing the ECS information, and in actual use, the processing of the ECS information may be performed through different program modules according to the practical needs, i.e., an internal structure of each device is divided into different program modules to perform all of, or a part of, the above-mentioned processing. In addition, the ECS information processing devices and the ECS information processing methods belong to a same inventive concept, and the implementation of the devices may refer to those of the methods, which will not be particularly defined herein.

The present disclosure further provides in some embodiments a communication device, e.g., an SMF or a UDM. As shown in Fig. 9, the communication device includes a memory 32, a processor 31, and a computer program stored in the memory 32 and executed by the processor 31. The processor 31 is configured to execute the computer program so as to implement the steps of the method for the SMF, or the steps of the method for the UDM.

In a possible embodiment of the present disclosure, the communication device further includes one or more network interfaces 33. It should be appreciated that, the components of the communication device may be coupled together through a bus system 34. The bus system 34 is configured to achieve connection and communication among the components. Apart from a data bus, the bus system 34 may further include a power source bus, a control bus and a state signal bus. For clarification, all these buses in Fig. 9 may be collectively called as bus system 34.

It should be appreciated that, the memory 1102 may be a volatile memory, a nonvolatile memory or both. The nonvolatile memory may be a Read-Only Memory (ROM), a Programmable ROM (PROM), an Erasable PROM (EPROM), an electrically EPROM (EEPROM) or a flash memory. The volatile memory may be a Random Access Memory (RAM) which serves as an external high-speed cache. Illustratively but nonrestrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 32 intends to include, but not limited to, the above-mentioned and any other appropriate memories.

The above-mentioned method may be applied to, or implemented by, the processor 31. The processor 31 may be an integrated circuit (IC) having a signal processing capability. During the implementation, the steps of the above-mentioned method may be completed through an integrated logic circuit of hardware in the processor 31 or instructions in the form of software. The processor 31 may be a general-purpose processor, a digital signal processor, an application-specific integrated circuit (ASIC), a field programmable gate array (FPGA) or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a known storage medium. The storage medium may be located in the memory 32, and the processor 31 may read information stored in the memory 32 so as to implement the steps of the method in conjunction with the hardware.

Illustratively, the communication device is implemented through one or more ASICs, DSPs, Programmable Logic Devices (PLDs), Complex Programmable Logic Devices (CPLDs), FPGAs, general-purpose processors, controllers, MCUs, microprocessors, or any other electronic elements, so as to implement the above-mentioned method.

The present disclosure further provides in some embodiments a computer-readable storage medium storing therein a computer program, e.g., the memory 32. The computer program is executed by the processor 31 of the communication device, so as to implement the steps of the above-mentioned method. The computer-readable storage medium may be an FRAM, an ROM, a PROM, an EPROM, an EEPROM, a flash memory, a magnetic surface memory, an optical disk, or a CD-ROM, or any device including one or more of the above-mentioned memories.

The present disclosure further provides in some embodiments a computer-readable storage medium storing therein a computer program. The computer program is executed by a processor so as to implement the steps of the method for the SMF or the steps of the method for the UDM.

In the case of no conflict, the features in the method embodiments of the present disclosure may be combined to acquire new method embodiments.

In the case of no conflict, the features in the product embodiments of the present disclosure may be combined to acquire new product embodiments.

In the case of no conflict, the features in the method or device embodiments of the present disclosure may be combined to acquire new method or device embodiments.

It should be appreciated that, the device and method may be implemented in any other ways. For example, the embodiments for the device are merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together. The integrated functional units may be implemented in the form of hardware, or in the form of hardware plus software function units.

It should be appreciated that, all of, or parts of, the steps may be implemented through hardware associated with programs or instructions. The programs may be stored in a computer-readable storage medium, and executed so as to perform the above-mentioned steps. The storage medium includes any media capable of storing therein program codes, such as Read Only Memory (ROM), Random Access Memory (RAM), magnetic disc or optical disk.

Alternatively, in the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a mobile hard disk (HD), an ROM, an RAM, a magnetic disk or an optical disk.

## Claims

1. An Edge Configuration Server, ECS, information processing method, comprising:
determining (101), by a Session Management Function, SMF, first ECS configuration information in accordance with information regarding a service range of an ECS, wherein the first ECS configuration information comprises at least one of an address of the ECS, the service range of the ECS, a selection priority level of the ECS, or attribute information about the ECS; and
transmitting, by the SMF, to a User Equipment, UE, the first ECS configuration information,
the ECS information processing method being **characterized in that**
the ECS information processing method further comprises:
receiving, by the SMF, subscription information about the UE from a Unified Data Management, UDM, wherein the subscription information about the UE at least comprises second ECS configuration information, wherein the second ECS configuration information comprises at least one of the address of the ECS, the service range of the ECS, the selection priority level of the ECS, or the attribute information about the ECS;
determining, by the SMF, the first ECS configuration information, in accordance with the address of an ECS, the service range of the ECS, the selection priority level of the ECS, or the attribute information about the ECS included in the second ECS configuration information received from the UDM,
wherein the attribute information about the ECS comprises at least one of information about a party to which the ECS belongs or an application service list.

2. The ECS information processing method according to claim 1, wherein when the SMF comprises locally-configured ECS configuration information, the locally-configured ECS configuration information has a high priority level.

3. The ECS information processing method according to claim 1 or 2, further comprising receiving, by the SMF, a session establishment request message from the UE through an Access and Mobility Management Function, AMF, wherein the session establishment request message comprises indication information for requesting ECS configuration information.

4. The ECS information processing method according to claim 3, wherein
the first ECS configuration information is transmitted by the SMF to the UE through the AMF.

5. An Edge Configuration Server, ECS, information processing method, comprising:
receiving (201), by a Unified Data Management, UDM, second ECS configuration information from an Application Function, AF, through a Network Exposure Function, NEF; and
transmitting (202), by the UDM, the second ECS configuration information to a Session Management Function, SMF, such that first ECS configuration information is determined by the SMF in accordance with information regarding a service range of an ECS, wherein the first ECS configuration information comprises at least one of an address of the ECS, the service range of the ECS, a selection priority level of the ECS, or attribute information about the ECS,
the ECS information processing method being **characterized in that**
the first ECS configuration information is further determined by the SMF, in accordance with the address of an ECS, the service range of the ECS, the selection priority level of the ECS, or the attribute information about the ECS included in the second ECS configuration information received from the UDM,
wherein the attribute information about the ECS comprises at least one of information about a party to which the ECS belongs or an application service list.

6. A Session Management Function, SMF, **characterized by** comprising a memory, a processor, and a computer program stored in the memory and executed by the processor, wherein the processor is configured to execute the computer program so as to implement the Edge Configuration Server, ECS, information processing method according to any one of claims 1 to 4.

7. A Unified Data Management, UDM, **characterized by** comprising a memory, a processor, and a computer program stored in the memory and executed by the processor, wherein the processor is configured to execute the computer program so as to implement the Edge Configuration Server, ECS, information processing method according to claim 5.

8. A computer-readable program storage medium, **characterized by** in which a computer program is stored, upon executed by a processor of a Session Management Function, SMF, the computer program is configured to execute the computer program so as to implement the Edge Configuration Server, ECS, information processing method according to any one of claims 1 to 4.

9. A computer-readable program storage medium, **characterized by** in which a computer program is stored, upon executed by a processor of a Unified Data Management, UDM, the computer program is configured to execute the computer program so as to implement the Edge Configuration Server, ECS, information processing method according to claim 5.

10. A computer program product, **characterized by** in which a computer program is stored, upon executed by a processor of a Session Management Function, SMF, the computer program is configured to execute the computer program so as to implement the Edge Configuration Server, ECS, information processing method according to any one of claims 1 to 4.

11. A computer program product, **characterized by** in which a computer program is stored, upon executed by a processor of a Unified Data Management, UDM, the computer program is configured to execute the computer program so as to implement the Edge Configuration Server, ECS, information processing method according to claim 5.

## Patentansprüche

1. Verfahren zur Informationsverarbeitung für einen Edge-Konfigurationsserver, ECS, mit den Schritten:
Ermitteln (101) von erster ECS-Konfigurationsinformation durch eine Sitzungsverwaltungsfunktion, SMF, gemäß Information bezüglich eines Dienstbereichs eines ECS, wobei die erste ECS-Konfigurationsinformation eine Adresse des ECS, den Dienstbereich des ECS, eine Auswahlprioritätsstufe des ECS und/oder Attributinformation über den ECS umfasst; und
Übertragen der ersten ECS-Konfigurationsinformation durch die SMF an ein Benutzergerät, UE,
wobei das Verfahren zur ECS-Informationsverarbeitung **dadurch gekennzeichnet ist, dass**
das Verfahren zur Verarbeitung von ECS-Information ferner umfasst:
Empfangen von Abonnementinformation über das UE durch die SMF von einem Unified Data Management, UDM, wobei die Abonnementinformation über das UE mindestens zweite ECS-Konfigurationsinformation umfasst, wobei die zweiten ECS-Konfigurationsinformation die Adresse des ECS, den Dienstbereich des ECS, die Auswahlprioritätsstufe des ECS und/oder die Attributinformation über den ECS umfasst;
Ermitteln der ersten ECS-Konfigurationsinformation durch die SMF gemäß der Adresse eines ECS, dem Dienstbereich des ECS, der Auswahlprioritätsstufe des ECS oder der Attributinformation über den ECS, die in der vom UDM empfangenen zweiten ECS-Konfigurationsinformation enthalten sind, wobei die Attributinformation über den ECS Information über eine Partei, zu der der ECS gehört, und/oder eine Anwendungsdienstliste umfasst.

2. Verfahren zur Verarbeitung von ECS-Information nach Anspruch 1, bei dem, wenn die SMF lokal konfigurierte ECS-Konfigurationsinformation umfasst, die lokal konfigurierte ECS-Konfigurationsinformation eine hohe Prioritätsstufe aufweist.

3. Verfahren zur Verarbeitung von ECS-Information nach Anspruch 1 oder 2, das ferner das Empfangen einer Sitzungsaufbau-Anforderungsnachricht durch die SMF vom UE über eine Zugangs- und Mobilitätsmanagementfunktion (AMF) umfasst, wobei die Sitzungsaufbau-Anforderungsnachricht Hinweisinformation zum Anfordern von ECS-Konfigurationsinformation umfasst.

4. Verfahren zur Verarbeitung von ECS-Information nach Anspruch 3, bei dem die erste ECS-Konfigurationsinformation vom SMF über die AMF an das UE übertragen wird.

5. Verfahren zur Informationsverarbeitung für einen Edge-Konfigurationsserver, ECS, mit den Schritten:
Empfangen (201) von zweiter ECS-Konfigurationsinformation durch eine Unified Data Management-Funktion, UDM, von einer Anwendungsfunktion, AF, über eine Network Exposure-Funktion, NEF; und
Senden (202) der zweiten ECS-Konfigurationsinformation durch die UDM an eine Session Management-Funktion, SMF, so dass erste ECS-Konfigurationsinformation von der SMF gemäß Information bezüglich eines Dienstbereichs eines ECS ermittelt wird, wobei die erste ECS-Konfigurationsinformation eine Adresse des ECS, den Dienstbereich des ECS, eine Auswahlprioritätsstufe des ECS und/oder Attributinformation über den ECS umfasst,
wobei das Verfahren zur ECS-Informationsverarbeitung **dadurch gekennzeichnet ist, dass**
die erste ECS-Konfigurationsinformation ferner von der SMF entsprechend der Adresse eines ECS, dem Dienstbereich des ECS, der Auswahlprioritätsstufe des ECS oder der Attributinformation über das ECS ermittelt wird, die in der vom UDM empfangenen zweiten ECS-Konfigurationsinformation enthalten sind,
wobei die Attributinformation über das ECS Information über eine Partei, zu der das ECS gehört, und/oder eine Anwendungsdienstliste umfasst.

6. Sitzungsverwaltungsfunktion, SMF, **dadurch gekennzeichnet, dass** sie einen Speicher, einen Prozessor und ein im Speicher gespeichertes und vom Prozessor ausgeführtes Computerprogramm umfasst, wobei der Prozessor konfiguriert ist, um durch Ausführen des Computerprogramms das Verfahren zur Informationsverarbeitung für den Edge-Konfigurationsserver, ECS, nach einem der Ansprüche 1 bis 4 zu implementieren.

7. Unified Data Management (UDM), **dadurch gekennzeichnet, dass** es einen Speicher, einen Prozessor und ein im Speicher gespeichertes und vom Prozessor ausgeführtes Computerprogramm umfasst, wobei der Prozessor konfiguriert ist, um durch Ausführen des Computerprogramms das Verfahren zur Informationsverarbeitung für den Edge Configuration Server, ECS, nach Anspruch 5 zu implementieren.

8. Computerlesbares Programmspeichermedium, **dadurch gekennzeichnet, dass** darauf ein Computerprogramm gespeichert ist, das bei Ausführung durch einen Prozessor einer Session-Management-Funktion, SMF, konfiguriert ist, um das Verfahren zur Informationsverarbeitung für den Edge-Konfigurationsserver, ECS, nach einem der Ansprüche 1 bis 4 zu implementieren.

9. Computerlesbares Programmspeichermedium, **dadurch gekennzeichnet, dass** darauf ein Computerprogramm gespeichert ist, das bei Ausführung durch einen Prozessor einer Unified Data Management-, UDM,-Funktion konfiguriert ist, um durch Ausführen des Computerprogramms das Verfahren zur Informationsverarbeitung für den Edge Configuration Server, ECS, nach Anspruch 5 zu implementieren.

10. Computerprogrammprodukt, **dadurch gekennzeichnet, dass** ein Computerprogramm darin gespeichert ist, das bei Ausführung durch einen Prozessor einer Session-Management-Funktion, SMF, konfiguriert ist, um durch Ausführen des Computerprogramms das Verfahren zur Informationsverarbeitung für den Edge-Konfigurationsserver, ECS, nach einem der Ansprüche 1 bis 4 zu implementieren.

11. Computerprogrammprodukt, **dadurch gekennzeichnet, dass** ein Computerprogramm darin gespeichert ist, das bei Ausführung durch einen Prozessor eines Unified Data Management, UDM, konfiguriert ist, um durch Ausführen des Computerprogramms das Verfahren zur Informationsverarbeitung für den Edge Configuration Server, ECS, nach Anspruch 5 zu implementieren.

## Revendications

1. Procédé de traitement d'informations de serveur de configuration de bord, ECS, comprenant les étapes prévoyant de :
déterminer (101), par l'intermédiaire d'une fonction de gestion de session, SMF, des premières informations de configuration d'ECS conformément à des informations concernant une plage de service d'un ECS, dans lequel les premières informations de configuration d'ECS comprennent au moins un parmi une adresse de l'ECS, la plage de service de l'ECS, un niveau de priorité de sélection de l'ECS, ou des informations d'attribut concernant l'ECS ; et
transmettre, par l'intermédiaire de la SMF, à un équipement utilisateur, UE, les premières informations de configuration d'ECS,
le procédé de traitement d'informations d'ECS étant **caractérisé en ce que**
le procédé de traitement d'informations d'ECS comprend en outre les étapes prévoyant de :
recevoir, par l'intermédiaire de la SMF, des informations d'abonnement concernant l'UE à partir d'une gestion de données unifiée, UDM, dans lequel les informations d'abonnement concernant l'UE comprennent au moins des secondes informations de configuration d'ECS, dans lequel les secondes informations de configuration d'ECS comprennent au moins un parmi l'adresse de l'ECS, la plage de service de l'ECS, le niveau de priorité de sélection de l'ECS, ou les informations d'attribut concernant l'ECS ;
déterminer, par l'intermédiaire de la SMF, les premières informations de configuration d'ECS, conformément à l'adresse d'un ECS, à la plage de service de l'ECS, au niveau de priorité de sélection de l'ECS, ou aux informations d'attribut concernant l'ECS incluses dans les secondes informations de configuration d'ECS reçues de l'UDM,
dans lequel les informations d'attribut concernant l'ECS comprennent au moins une parmi des informations sur une partie à laquelle l'ECS appartient ou une liste de services d'application.

2. Procédé de traitement d'informations d'ECS selon la revendication 1, dans lequel lorsque la SMF comprend des informations de configuration d'ECS configurées localement, les informations de configuration d'ECS configurées localement présentent un niveau de priorité élevé.

3. Procédé de traitement d'informations d'ECS selon la revendication 1 ou 2, comprenant en outre l'étape prévoyant de recevoir, par l'intermédiaire de la SMF, un message de demande d'établissement de session en provenance de l'UE par l'intermédiaire d'une fonction de gestion d'accès et de mobilité, AMF, dans lequel le message de demande d'établissement de session comprend des informations d'indication pour demander des informations de configuration d'ECS.

4. Procédé de traitement d'informations d'ECS selon la revendication 3, dans lequel
les premières informations de configuration d'ECS sont transmises par la SMF à l'UE par l'intermédiaire de l'AMF.

5. Procédé de traitement d'informations de serveur de configuration de bord, ECS, comprenant les étapes prévoyant de :
recevoir (201), par l'intermédiaire d'une gestion de données unifiée, UDM, des secondes informations de configuration d'ECS à partir d'une fonction d'application, AF, par l'intermédiaire d'une fonction d'exposition de réseau, NEF ; et
transmettre (202), par l'intermédiaire de l'UDM, les secondes informations de configuration d'ECS à une fonction de gestion de session, SMF, de sorte que des premières informations de configuration d'ECS soient déterminées par la SMF conformément à des informations concernant une plage de service d'un ECS, dans lequel les premières informations de configuration d'ECS comprennent au moins un parmi une adresse de l'ECS, la plage de service de l'ECS, un niveau de priorité de sélection de l'ECS, ou des informations d'attribut concernant l'ECS,
le procédé de traitement d'informations d'ECS étant **caractérisé en ce que**
les premières informations de configuration ECS sont en outre déterminées par la SMF, conformément à l'adresse d'un ECS, à la plage de service de l'ECS, au niveau de priorité de sélection de l'ECS, ou aux informations d'attribut concernant l'ECS incluses dans les secondes informations de configuration d'ECS reçues de l'UDM,
dans lequel les informations d'attribut concernant l'ECS comprennent au moins une parmi des informations sur une partie à laquelle l'ECS appartient ou une liste de services d'application.

6. Fonction de gestion de session, SMF, **caractérisée en ce qu'**elle comprend une mémoire, un processeur et un programme informatique stocké dans la mémoire et exécuté par le processeur, dans laquelle le processeur est configuré pour exécuter le programme informatique de manière à mettre en œuvre le procédé de traitement d'informations de serveur de configuration de bord, ECS, selon l'une quelconque des revendications 1 à 4.

7. Gestion de données unifiée, UDM, **caractérisée en ce qu'**elle comprend une mémoire, un processeur et un programme informatique stocké dans la mémoire et exécuté par le processeur, dans lequel le processeur est configuré pour exécuter le programme informatique de manière à mettre en œuvre le procédé de traitement d'informations de serveur de configuration de bord, ECS, selon la revendication 5.

8. Support de stockage de programme lisible par ordinateur, **caractérisé en ce qu'**un programme informatique y est stocké, et lors de son exécution par un processeur d'une fonction de gestion de session, SMF, le programme informatique est configuré pour exécuter le programme informatique de manière à mettre en œuvre le procédé de traitement d'informations de serveur de configuration de bord, ECS, selon l'une quelconque des revendications 1 à 4.

9. Support de stockage de programme lisible par ordinateur, **caractérisé en ce qu'**un programme informatique y est stocké, et lors de son exécution par un processeur d'une gestion de données unifiée, UDM, le programme informatique est configuré pour exécuter le programme informatique de manière à mettre en œuvre le procédé de traitement d'informations de serveur de configuration de bord, ECS, selon la revendication 5.

10. Produit de programme informatique, **caractérisé en ce qu'**un programme informatique y est stocké, et lors de son exécution par un processeur d'une fonction de gestion de session (SMF), le programme informatique est configuré pour exécuter le programme informatique de manière à mettre en œuvre le procédé de traitement d'informations de serveur de configuration de bord, ECS, selon l'une quelconque des revendications 1 à 4.

11. Produit de programme informatique, **caractérisé en ce qu'**un programme informatique est stocké, et lors de son exécution par un processeur d'une gestion de données unifiée, UDM, le programme informatique est configuré pour exécuter le programme informatique de manière à mettre en œuvre le procédé de traitement d'informations de serveur de configuration de bord, ECS, selon la revendication 5.
